# EUROPÄISCHE PATENTANMELDUNG

(11) **EP 0 936 061 A2**
(43) Veröffentlichungstag der Anmeldung: **18.08.1999**
(21) Anmeldenummer: 98124488.2
(22) Anmeldetag: 28.12.1998
(51) Int. Cl.: B32B 27/12, D04H 13/00

(54) **Verbundstoff**

(30) Priorität: 17.02.1998 DE 19806530
(71) Anmelder: Firma Carl Freudenberg, 69469 Weinheim (DE)
(72) Erfinder: Groitzsch, Dieter Dr., 69493 Hirschberg (DE); Klein, Bernhard Dr., 69488 Birkenau (DE); Löcher, Engelbert, 67551 Worms (DE)

(57) **Zusammenfassung**

Verbundstoff, umfassend ein Laminat (1) aus einer mit einem Vliesstoff (7) verklebten Folie (5) aus polymerem Werkstoff, dadurch gekennzeichnet, daß der Vliesstoff (7) und die Folie (5) nur an örtlich getrennten Stellen miteinander verklebt sind und daß das Laminat (1) nach seiner Bildung zumindest in einer Richtung gereckt ist.

## Beschreibung

### Technisches Gebiet

Die Erfindung betrifft einen Verbundstoff, umfassend ein Laminat aus einer mit einem Vliesstoff verklebten Folie aus polymerem Werkstoff.

### Stand der Technik

Ein solcher Verbundstoff ist bekannt. Die Folie wird bei seiner Herstellung in flüssigem Zustand auf den Vliesstoff aufgetragen, wobei sich eine kontinuierlich durchgehende, gegenseitige Verklebung zwischen dem Vliesstoff und dem die Folie bildenden, polymeren Werkstoff ergibt. Der erhaltene Verbundstoff hat im allgemeinen eine relativ große Dicke und ist wasser- und wasserdampfundurchlässig sowie verhältnismäßig unflexibel. Er gelangt überwiegend als Kunstleder bei der Herstellung von Koffern zur Anwendung.

### Darstellung der Erfindung

Der Erfindung liegt die Aufgabe zugrunde, einen Verbundstoff der eingangs genannten Art derart weiterzuentwickeln, daß sich bei vergleichsweise besserer Flexibilität und Wasserdampfdurchlässigkeit eine geringere Dehnung und eine relativ vergrößerte Festigkeit ergibt. Diese Aufgabe wird erfindungsgemäß beim Verbundstoff der eingangs genannten Art mit den kennzeichnenden Merkmalen von Anspruch 1 gelöst. Auf vorteilhafte Ausgestaltungen nehmen die Unteransprüche bezug.

Bei dem erfindungsgemäßen Verbundstoff ist es vorgesehen, daß der Vliesstoff und die Folie unabhängig voneinander erzeugt und nur an örtlich getrennten Stellen miteinander verklebt sind und daß das solcherart beschaffene Gebilde nach seiner Laminierung zumindest in einer Richtung gereckt ist. Die Dicke des Laminates läßt sich hierdurch in einem erheblichen Maße reduzieren, ohne daß die Gefahr besteht, daß unkontrollierbare Risse innerhalb der Folie oder des Vliesstoffes entstehen. Die Flexibilität und Wasserdampfdurchlässigkeit werden hierdurch wesentlich verbessert. Parallel hierzu ergibt sich eine zunehmende Orientierung sowohl der den Vliesstoff bildenden Fasern als auch der die Folie bildenden Makromoleküle parallel zur Richtung der Reckung, was die relative Festigkeit in dieser Richtung erhöht. Außerdem ergibt sich eine deutliche Vergrößerung der flächenmäßigen Ausdehnung des Laminats, was die flächenhafte Ausbeute verbessert unter Kostengesichtspunkten von Vorteil ist.

Der erfindungsgemäße Verbundstoff zeichnet sich bereits dann durch wesentlich verbesserte Eigenschaffen aus, wenn die Reckung nur in einer Richtung bewirkt wird. Entsprechende Verbundstoffe lassen sich besonders einfach erzeugen, beispielsweise unter Verwendung eines Reckwerkes, welches mindestens zwei aufeinander folgende Reckwalzenpaare umfaßt. Im allgemeinen wird die Verwendung von Reckwerken aus zumindest fünf aufeinanderfolgenden Reckwalzenpaaren bevorzugt, deren Umlaufgeschwindigkeit jeweils nur geringfügig gesteigert ist. Die unter Vermeidung von Rissen maximal erreichbare Reckung läßt sich hierdurch sicherer erreichen.

Als vorteilhaft für die meisten Anwendungen hat es sich bewährt, wenn das Laminat sowohl in Längs- als auch in Querrichtung gereckt ist. Bei der Anwendung einer solchen Reckung ist es nützlich, die insgesamt verfügbare Oberfläche des Verbundstoffes bis an die maximal erreichbaren Reckwerte anzunähern.

Für bestimmte Anwendungen hat es sich als vorteilhaft bewährt, wenn das Laminat in Längs- und Querrichtung voneinander abweichende, physikalische Eigenschaften aufweist. Ein solches Laminat läßt sich erhalten, in dem die in Längs- und Querrichtung vorgenommene Reckung mit einer voneinander abweichenden Intensität vorgenommen wird. Besonders vorteilhafte Produkte weisen eine Reckung in Längsrichtung auf, die diejenige in Querrichtung um zumindest 30 % und um höchstens 70 % übertrifft.

Durch die Reckung des Laminats wird die Wasserdampfdurchlässigkeit der Folie wesentlich verbessert. Beispielsweise für eine Anwendung im Hygienebereich und insbesondere bei den Windelabdeckungen hat es sich als vorteilhaft bewährt, wenn das Laminat in einem solchen Maße gereckt ist, daß die Wasserdampfdurchlässigkeit zumindest 800g/m²/24h, gemessen nach DIN 53122, Klima B, beträgt.

Der Vliesstoff und die Folie können generell auch unter Verwendung eines sekundären Klebstoffes miteinander verbunden werden. Die ordnungsgemäße Aufbringung und Verarbeitung eines Klebstoffes ist jedoch mit einem gewissen Aufwand verbunden, weshalb im Rahmen der vorliegenden Erfindung eine Ausführung bevorzugt wird, bei der der Vliesstoff und die Folie ohne die Verwendung eines sekundären Klebstoffes allein durch vorübergehendes Erschmelzen zumindest einer der enthaltenen Schichten in örtlich getrennten Verschweißungszonen verbunden sind. Hierdurch läßt sich nicht nur die Qualität der gegenseitigen Verbindung des Vliesstoffes und der Folie besser als unter Verwendung eines sekundären Klebstoffes kontrollieren, sondern auch die chemische Wechselwirkung des gebrauchsfertigen Materials mit während der bestimmungsgemäßen Verwendung auftreffenden, sekundären Substanzen. Insbesondere für Anwendungen auf dem Hygienesektor ist das von großem Vorteil.

Die Verschweißungszonen können im Zuge von Linien angeordnet sein, die im wesentlichen quer zur Streckungsrichtung verlaufen. Sie bewirken bei einer solchen Anordnung nicht nur eine gegenseitige Verbindung des Vliesstoffs mit der Folie, sondern darüber hinaus eine gewisse Versteifung des Produktes in Richtung des Verlaufs. Dieser zuletzt genannte Effekt tritt besonders deutlich in Erscheinung, wenn die Verschweißungszonen als solche geradlinig ausgebildet und parallel zur Richtung gedachter und gerade verlaufender Linien angeordnet sind, zweckmäßig als durchgehend ausgebildete Linien.

Eine Delaminierung der beiden Schichten läßt sich ausschließen, wenn diese in die Verschweißungszonen mit ihrer ganzen Dicke eingebunden sind. Auch bei einer reibenden Beanspruchung der Oberfläche ist es dadurch weitestgehend ausgeschlossen, daß Bestandteile aus der Oberfläche herausgelöst werden und eine Verschmutzung der Umgebung bewirken.

Die vorstehend angesprochene Wirksamkeit wird besonders zuverlässig erhalten, wenn der in dem Laminat enthaltene Vliesstoff zumindest teilweise aus endlosen Fasern besteht. Vliesstoffe, die zumindest teilweise aus Stapelfasern bestehen, sind jedoch generell ebenfalls verwendbar.

Die in dem Vliesstoff enthaltenen Fasern können im wesentlichen unverstreckt sein, was die Verschweißbarkeit verbessert und es gestattet, eine besonders ausgeprägte, nachträgliche Reckung vorzunehmen. Danach kann es zweckmäßig sein, die Kristallinität der im Vliesstoff enthaltenen Fasern durch Nachtempern zu vergrößern. Die diesbezügliche Technologie ist im Fachgebiet bekannt.

Der in dem Laminat enthaltene Vliesstoff kann zumindest teilweise aus schmelzgeblasenen Mikrofasern bestehen, insbesondere im Bereich der freiliegenden Oberfläche. Mikrofasern haben einen Durchmesser im Micrometerbereich. Als Folge hiervon ergibt sich bei hinreichender Faserdichte eine Oberflächenstruktur, die von schleimhautähnlicher Zartheit ist. Insbesondere für Anwendungen im Hygiene- und Medizinalbereich haben sich entsprechende Ausbildungen ausgezeichnet bewährt.

Das Laminat besteht in seiner Gesamtheit aus polymerem Werkstoff. Als besonders zweckmäßig hat es sich bewährt, wenn die in dem Laminat enthaltene Folie aus Polypropylen oder Polyethylen besteht. Sie kann im fertigen Produkt eine Dicke von 15 bis 60 Micrometer haben.

Als zweckmäßig hat es sich bewährt, wenn die Folie einen Gehalt an gleichmäßig verteilten Mikropartikeln zur Begünstigung der Bildung von Mikroporen während der Verreckung enthält. Derartige Mikropartikel können aus eingemischtem Kreidestaub o.ä. bestehen. Der Mengengehalt kann bis zu 60 Gew.% betragen.

Nach einer anderen Ausgestaltung ist es vorgesehen, daß sich die Folie und der Vliesstoff im gebrauchsfertigen Verbundstoff im wesentlichen parallel zueinander erstrecken. Die Herstellung entsprechender Materialien setzt allerdings voraus, daß die Folie und der Vliesstoff hinsichtlich ihrer Dehnbarkeit und Elastizität in spezieller Weise aneinander angepaßt werden.

Für viele Anwendungen hat es sich als vorteilhaft bewährt, wenn die Folie und/oder der Vliesstoff gekräuselt ist. Die Kräuselung kann dabei in voneinander abweichenden Richtungen verlaufen. Sie verleiht dem gebrauchsfertigen Verbundstoff ein besonders weiches, textilartiges Erscheinungsbild sowie einen entsprechenden Griff.

Der erfindungsgemäße Verbundstoff läßt sich besonders günstig verwenden zur Herstellung von Hygieneartikeln, Verpackungsmaterialien und / oder Baumembranen. In allen diesen Bereichen gibt es spezifische Anforderungen, die mit dem erfindungsgemäßen Verbundstoff wesentlich besser befriedigt werden können als mit den bisher bekannten Materialien.

### Kurzbeschreibung der Zeichnung

In der Zeichnung ist ein Ausschnitt aus einem Verbundstoff der erfindungsgemäßen Art wiedergegeben. Dieser besteht aus einem Vliesstoff 1, der an örtlich getrennten Stellen mit einer Folie 2 durch vorübergehendes Erschmelzen des ihn bildenden Werkstoffes verklebt und anschließend zweidimensional gereckt ist. Bezogen auf das Ausgangsmaterial hat der Verbundstoff dadurch eine relativ verminderte Dicke und Dehnung bei deutlich vergrößerter, relativer Festigkeit. Es zeigen:
- Figur 1:: eine erste beispielhafte Ausführung des Verbundstoffes in quergeschnittener Darstellung,
- Figur 2:: den Verbundstoff gemäß Figur 1 in einer Ansicht von oben. Die Verklebungszonen sind geradlinig verlaufend gestaltet und parallel zueinander angeordnet,
- Figur 3:: einen Verbundstoff ähnlich Figur 2 in einer Ansicht von oben, bei dem die Verklebungszonen wellenförmig verlaufend ausgebildet sind und sich parallel zueinander erstrecken
- Figur 4:: einen Verbundstoff in quergeschnittener Darstellung, der nach vorausgegangener Dehnung entlastet worden ist.

### Ausführung der Erfindung

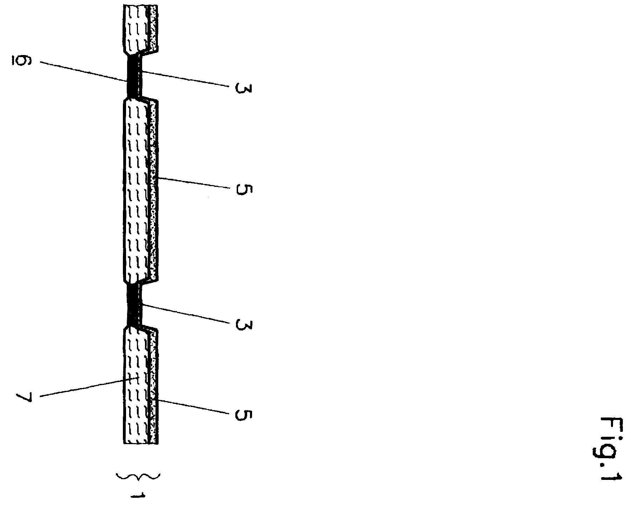

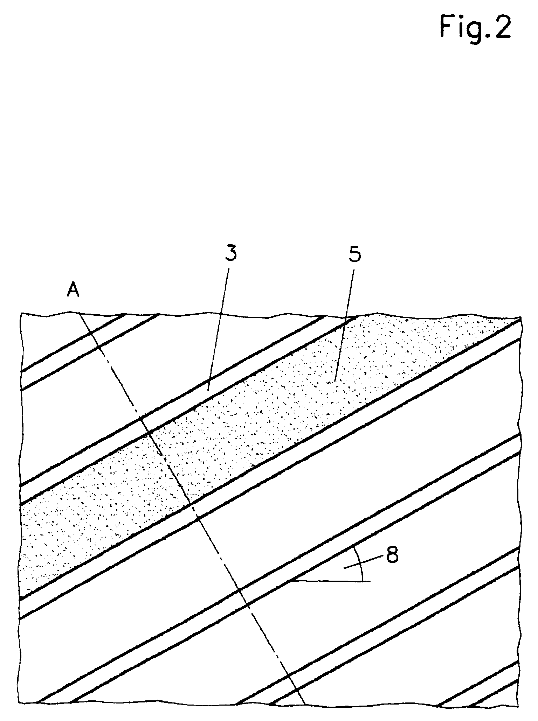

Der in den Figuren 1 bzw. 2 in längsgeschnittener Darstellung bzw. in der Draufsicht wiedergegebene Verbundstoff besteht aus einer Folie 5, die auf einen Vliesstoff 7 aufkaschiert ist.

Die Folie 5 kann aus irgend einem thermoplastischen Werkstoff, bevorzugt aus Polyethylen oder Propylen bestehen. Sie ist zweckmäßig zur Bildung von Mikroporen während der Verreckung hochgradig mit Kreidepartikeln gefüllt, deren Durchmesser im Mikrometerbereich liegt. Die Folie 5 kann unabhängig von dem Vliesstoff erzeugt und nachträglich auf diesem abgelegt, jedoch wahlweise auch unmittelbar auf den Vliesstoff aufextrudiert sein.

Der Vliesstoff 7 kann aus Stapel- oder Endlosfasern aus irgend einem thermoplastischen Werkstoff bestehen, zweckmäßig aus einem dem Werkstoff der Folie artverwandten Werkstoff. Er kann bereits vor dem Aufbringen der Folie eine gewisse Verfestigung aufweisen, was die Handhabung erleichtert, jedoch wahlweise auch erst im Zuge der Verklebung mit der Folie eine Verfestigung erfahren. Das Flächengewicht kann 30 bis 150 g/m² bei einer Dicke, gemessen nach EN 29073-02A von 0,05 bis 1,00 mm betragen.

Die Folie 5 und der Vliesstoff 7 können, wie in Fig. 1 gezeigt, im Zuge von geradlinigen, sich parallel zueinander erstreckenden Verschweißungszonen 3 miteinander verbunden werden. Zur Herstellung der Verbindung wird die Folie auf die Oberseite des Vliesstoffs 7 lose aufgelegt und das so erhaltene Gebilde durch den Spalt zwischen zwei miteinander in Eingriff stehenden Kalanderwalzen hindurchgeleitet, von denen die eine ihre Oberfläche entsprechend Fig. 1 überragende, metallische Erhebungen zur Erzeugung der Verschweißungszonen aufweist. Die Linienpressung, die Temperatur und die Umlaufgeschwindigkeit der Walzen werden so aufeinander abgestimmt, daß das Laminat nach dem Verlassen des Walzenspaltes im Bereich der Verbindungszonen 3 ein weitgehend homogenes Erscheinungsbild aufweist, in dem nahezu die gesamte Fasersubstanz des Vliesstoffs 7 und diejenige der Folie 2 ineinander übergehend verschmolzen sind. Der Verbundstoff zeichnet sich im Bereich der Verbindungszonen 3 durch eine große Steifigkeit und Formbeständigkeit aus. Er ist in diesen Zonen wasserdampfundurchlässig.

Der Verbundstoff wird im Anschluß an den vorstehend beschriebenen Kaschierprozess einer Reckung quer zur Längsrichtung der Verbindungszonen 3 unterworfen. Hierzu wird der Verbundstoff zwischen zumindest zwei aufeinander folgende Reckwalzenpaare hindurchgeführt, die mit zunehmender Geschwindigkeit betrieben werden und eine zunehmende Reckung des hindurchgeleiteten Verbundstoffes bewirken. Die dabei in den Verbundstoff geleiteten Kräfte bewirken vor allem eine Reckung und plastische Verformung der Folie 5 mit der Folge, daß sich der polymere Werkstoff von der Oberfläche der darin enthaltenen Kreidepartikel unter Bildung von Mikroporen ablöst. Die Wasserdampfdurchlässigkeit des Verbundstoffs erfährt dadurch eine deutliche Verbesserung, was seine Verwendung auf dem Hygienesektor begünstigt.

Die Verbindungszonen 3 können auch diagonal zur Längsrichtung des Vliesstoffs verlaufen oder eine von der beschriebenen Ausführungsform abweichende Gestalt haben, beispielsweise eine punktförmige Ausbildung oder beliebige, andere Musterungen. Wichtig ist es lediglich, daß sich die während des Reckprozesses eingesetzten Kräfte nicht unmittelbar parallel zur Längsrichtung der Verschweißungszonen 3 auszuwirken vermögen, weil bei einer solchen Einleitung eine Rißbildung innerhalb der Verschweißungszonen zu befürchten ist. Bei einer Ausbildung der Verbindungszonen 3 nach Art eines Waffelmusters ist es dementsprechend erforderlich, die zur Reckung erforderlichen Kräfte senkrecht zur Oberfläche des Verbundstoffs in diesen einzuleiten, beispielsweise unter Verwendung eines senkrecht einwirkenden Luft- oder Schaumstoffkissens, während der Verbundstoff als solcher im Zuge der Verbindungszonen 3 mechanisch abgestützt und in diesen Zonen an einer Deformierung gehindert wird. Die zwischen den Abstützungszonen befindlichen Bereiche können bei einer solchen Vorgehensweise ergänzend durch zurückversetzt angeordnete Abstützflächen abgestützt werden, um die Dehnung dieser Bereiche auf vorgegebene Werte zu begrenzen und eine Überdehnung und Beschädigung zu verhindern.

Im Rahmen der vorliegenden Erfindung wird demgegenüber eine Ausführung bevorzugt, bei der die zur Reckung benötigten Kräfte im wesentlichen parallel zur Längsrichtung des Verbundsstoffs eingeleitet werden. Derartige Verfahrensweisen sind im Rahmen einer großtechnischen Produktion wesentlich einfacher zu handhaben. Bei dem in Figur 2 gezeigten Ausführungsbeispiel haben die Verbindungszonen 3 in allen Teilbereichen einen übereinstimmenden Verdichtungsgrad. Sie sind ununterbrochen ausgebildet und erstrecken sich über die gesamte Verbundstoffbreite. Die Verbindungszonen können quer zur Längsrichtung des Verbundstoffs verlaufen, jedoch auch parallel zu dieser oder unter irgendeinem Winkel 8. Auch nicht unterbrochene, wellenförmig verlaufende Linienzüge oder Linien mit einem beliebig anderen Verlauf sind einsetzbar. Wichtig ist jedoch, daß die Reckung nicht zwischen zwei Punkten des Verbundstoffs vorgenommen wird, die durch eine ununterbrochene, geradlinig verlaufende Verschweißungszone unmittelbar verbunden sind.

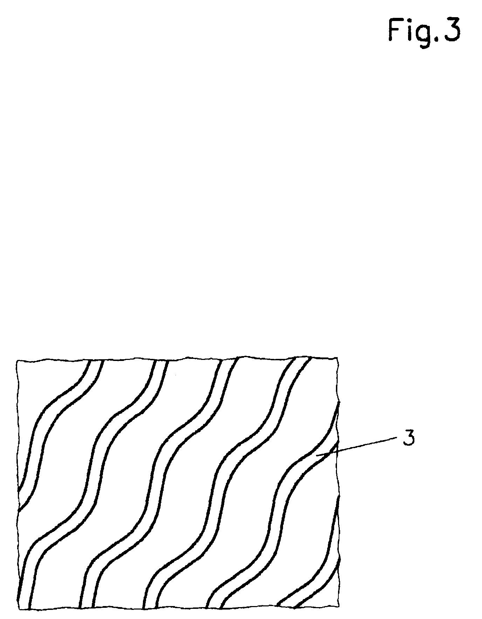

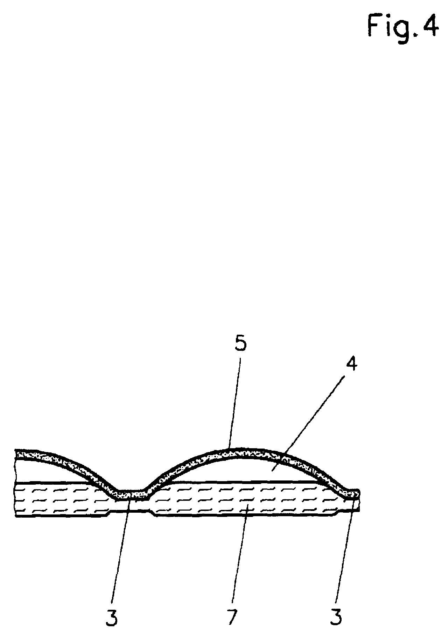

Figur 3 zeit einen Verbundstoff in einer Ansicht von oben, bei dem die parallel zueinander verlaufenden Verbindungszonen wellenförmig gestaltet sind mit einer mittleren Neigung, die mit der Längsrichtung des Verbundstoffes einen Winkel von etwa 45° einschließt. Der enthaltene Vliesstoff 1 weist ein elastisches Rückstellvermögen nach der Reckung auf, das größer ist als dasjenige der Folie. Dieses wird in Figur 4 angedeutet. Nach der Entspannung hat sich der Vliesstoff 1 in den ungebundenen Bereichen 13, d.h. in den Zwischenräumen der Verbindungszonen 3 zusammengezogen unter entsprechender Verkleinerung der Größe. Die zuvor ebenfalls gereckte, kreidegefüllte Folie 5 weist die durch die Reckung verursachte mikroporöse Struktur nach wie vor auf, besitzt aber, bezogen auf den Vliesstoff 1, kein vergleichbar gutes Rückstellvermögen. Dadurch bilden sich in den Zwischenräumen der Verbindungszonen 3 tunnelförmige Kanäle 15 zwischen den Verbindungszonen 3, der Folie 5 und dem Vliesstoff 7 aus. Die Weichheit, die Drapierfähigkeit und die Formenanpassungsfähigkeit des Verbundstoffes werden hierdurch deutlich verbessert.

Nachfolgend wird die Erfindung anhand von drei konkreten Beispielen weiter verdeutlicht:

### Beispiel 1:

Es wird ein Vlies aus Polypropylen-Endosfilamenten unter Verwendung der bekannten Spinnvliesstoff-Technologie erzeugt und auf einem Siebband abgelegt, der ein Gewicht von 60 g/m² aufweist. Die Verstreckung der einzelnen, den Vliesstoff bildenden Filamente mit Hilfe von gerichteten Luftströmen erfolgt nur zu einem technisch gerade noch zur Faserablegung notwendigen Minimalmaß. Die einzelnen Filamente des weitgehend unverstreckten Polypropylen - Spinnvlieses weisen einen Titer von 4,5 dtex auf. Die Einzelfilamente werden in der Weise abgelegt, daß eine durchschnittliche Orientierung längs zu quer von 3/2 entsteht.

Auf das noch unverfestigte Spinnvlies wird anschließend mit Hilfe einer Breitschlitzdüse eine Folie aus Linear Low Densitiy Polyethylene (LLDPE) mit gleichmäßig darin verteilten, mineralischen Füllstoffpartikeln unmittelbar aufextrudiert. Der Füllstoff besteht aus Kreidepulver mit einer durchschnittlichen Partikelgröße von 1 Micron. Er ist in einer Menge von 50 Gew.-% in der Schmelze enthalten und gleichmäßig darin verteilt. Das Flächengesicht der so gebildeten und auf dem Vlies abgelegten Folie beträgt 75 g/m².

Die mineralisch gefüllte Folie und das Vliesstoff werden durch nachfolgende Kalandrierung zwischen einer strukturierten und einer glatten Stahlwalze musterartig miteinander verschweißt. Die die Folie tragende Seite steht dabei in Eingriff mit der strukturierten Walze, die weitgehend unverstreckte Spinnvlies-Seite mit der glatten Walze. Die Temperatur der glatten Walze beträgt 145°C, diejenige der strukturierten Walze 125°C.

Die Oberfläche der strukturierten Walze besteht aus parallel zueinander ausgerichteten Erhebungen und Vertiefungen in abwechselnder Reihenfolge. Die Erhöhungen sind geradlinige Stege, die sich wie Querbalken über die gesamte Walzenbreite kontinuierlich ausdehnen. Die Stege weisen eine Höhe von 1,80 mm und eine Breite von 3,20 mm auf. Ihre Stirnflächen nehmen 25% der Oberfläche der Walze und somit 25 % der theoretisch erreichbaren Bindefläche ein. Die Kanten der Stege sind leicht abgerundet, um materialschädigende Schnittwirkungen zu vermeiden.

Nach der Kalanderpassage bei einem Liniendruck von 70 N/mm und einer Geschwindigkeit von 80 m/min ist die mineralstoffgefüllte Folienbeschichtung eines Flächengewichts von 75 g/m² im Bereich der Einwirkungszonen der Stege innig mit dem Endlosfilament-Vliesstoff verschweißt. Optische Ausmessungen der Verschweißungszonen haben nicht den theoretisch zu erwartenden Betrag von 25% ergeben, sondern einen Flächenanteil von 21,8 %.

Eine Trennung der Beschichtungsmasse von dem Spinnvliesstoff ist an den Verschweißungsstellen zerstörungsfrei nicht möglich. Innerhalb der restlichen Fläche von 78,2 % ist eine Spaltung an der Grenzfläche zwischen der Beschichtungsmasse und dem Vliesstoff möglich, jedoch aufgrund des geringen Abstandes der Verschweißungszonen von 10 mm in einer Zugprüfmaschine nicht quantitativ meßbar, da nicht einspannbar.

Anschließend wird der 135 g/m² schwere Verbundstoff in bekannter Weise bei einer Temp. von 67 °C mit Hilfe von Walzenstreckwerken in Längsrichtung gestreckt. Am Ende des Verstreckvorganges resultiert ein Breitenschwund von 9 %, bezogen auf die Breite vor der Verstreckung, und eine Längung um 185%, woraus sich insgesamt eine Flächenzunahme um (2,85 x 0,91 - 1) x 100 = 159,35 % ergibt. Das Flächengewicht der verstreckten Ware reduziert sich von 135 auf 52,05 g/m².

Die Wasserdampfdurchlässigkeit (WDD) wurde vor und nach der Verstreckung gemessen nach DIN 53 122, Klima B, d.h. bei 38°C und 90 % rel. Luftfeuchtigkeit über Calciumchlorid als Trockenmittel:

| | |
|---|---|
| WDD vor der Verstreckung: | 5 g/m² 24 h |
| WDD nach der Verstreckung: | 1080 g/m² 24 h |

Nachdem die Wasserdichtheit gemessen nach DIN 53 886 über 150 mbar lag, wurde die verstreckte Ware auf Pinholes überprüft. Hierzu wurde der Prüfling vom Format 15 x 15 cm mit der Beschichtungsseite nach oben auf ein vierlagiges Löschpapier mit etwas größerer Abmessung gelegt und an insgesamt 20 Stellen rot eingefärbtes Isopropanol aufpipettiert. An keiner Stelle ist die rote Lösung zum Löschpapier durchgedrungen. Die Ware ist somit als pinholefrei zu betrachten.

An dem verstrecken Fertigmaterial wurden die Faserdurchmesser gemessen und auf dtex umgerechnet. Es wurde dabei festgestellt, daß diese überraschenderweise schwanken im Bereich von 1,3 bis 2,5 dtex mit einem arithmetischen Mittelwert von 1,7 dtex.

### Beispiel 2:

Auf das entsprechend Beispiel 1 hergestellte, weitestgehend unverstreckte Polypropylen-Spinnvlies mit einem Gewicht von 60 g/m² wird eine kreidegefüllte Schmelzmasse mit einem Gewicht von 78 g/m² aufextrudiert.

Die Extrusionsmasse besteht aus 43 Gew. - % Linear Low Densitiy Polyethylene (LLDPE), 7 Gew.% eines Klebrigkeitsvermittlers auf Basis eines Kohlenwasserstoffes mit einem Erweichungspunkt von 94°C und 50 % Kreide mit einer durchschnittlichen Partikelgröße von 1 Micron.

Die Verschweißung des Beschichtungsauftrages mit dem Spinnvliesstoff-Träger erfolgt mit dem in Beispiel 1 bereits beschriebenen Walzenpaar. Die Temperatur der glatten Walze betrug wieder 145°C und die der strukturierten Walze 93°C.

Anschließend wird das 138 g/m² schwere Laminat in bekannter Weise mit Hilfe von Walzenstreckwerken in Längsrichtung bei einer Temperatur von 62°C gestreckt. Am Ende des Verstreckvorganges resultiert ein Breitenschwund von 12 %, bezogen auf die Breite vor der Verstreckung, und eine Längung um 235%, bezogen auf die ursprüngliche Länge woraus sich insgesamt eine Flächenzunahme um (3,35 x 0,88 - 1) x 100 = 194,8 % entspricht. Das Flächengewicht der verstreckten Ware reduziert sich durch den Reckvorgang von 138 auf 46,8 g/m².

Die Wasserdampfdurchlässigkeit (WDD) wurde vor und nach der Verstreckung gemessen nach DIN 53 122, Klima B, d.h. bei 38°C und 90 % rel. Luftfeuchtigkeit über Calciumchlorid als Trockenmittel:

| | |
|---|---|
| WDD vor der Verstreckung: | 12 g/m² 24 h |
| WDD nach der Verstreckung: | 1567 g/m² 24 h |

Wie im Beispiel 1 konnten keine Pinholes entdeckt werden.

Der durchschnittliche Fasertiter betrug 1,5 dtex mit einer Schwankungsbreite von 1,2 bis 2,4.

### Beispiel 3:

Es wurden 55 g/m² Endlosfilamente mit einem Titer von 4,80 dtex aus elastomeren Metallocen-katalysiertem LLDPE mit gerichteten Luftströmen zu einem Flächengebilde auf einem Band abgelegt, entsprechend der unter Beispiel 1 beschriebenen Methode. Aus der Reihe dieser elastomeren LLDPE's wurde diejenige Type mit der höchsten spez. Dichte von 0,93 g/cm³ und damit der geringsten Verdehnbarkeit ausgewählt.

Die kreidegefüllte Schmelzmasse aus Beispiel 1 wird auf das Flächengebilde aus begrenzt elastomeren Endlosfilamenten aufextrudiert. Die stegartige ausgebildeten Verschweißungszonen der beiden Schichten wurden im Spalt der Kalanderwalzen analog zu der in Beispiel 1 angegebenen Verfahrensweise erzeugt. Die Temperatur der strukturierten Walze beträgt 125°C und die der glatten Walze 109 °C. Die stegartigen Walzenerhebungen sind im Gegensatz zu Beispiel 1 so ausgestaltet, daß sie balkenartige Verschweißstellen ergeben, die im 30° Winkel zur Querrichtung bzw. 60° Winkel zur Maschinenrichtung und parallel zueinander orientiert sind.

Anschließend wird das erhaltene Gebilde zunächst in Längsrichtung bei einer Temp. von 55°C auf das 2,05fache der ursptunglichen Länge gereckt unter einem Breitenverlust von 25 %. Danach wird in Querrichtung auf das 1,30fache der Breite vor der Längsverstreckung gereckt. Dies entspricht einer Gesamtflächenreckung auf das 2,66fache (bzw. um das 1,66fache).

Nach der Entlastung relaxiert die Ware auf die 2,24fache Fläche, bezogen auf den Zustand vor der Reckung. Dies entspricht einem Flächenverlust von 16 %, bezogen auf die Fläche im gespannten Zustand nach der Reckung. Der elastische Spinnvliesstoff-Träger 7 weist nach der Relaxation eine glatte Unterseite und die mikroporöse Beschichtung gewölbte Erhebungen auf, die zwischen den Verschweißstellen durch tunnelartige Freiräume 4 von dem Vliesstoff 7 beabstandet sind. Auch nach vorausgegangener Durchnässung des Vliesstoffs 7 fühlt sich die Oberseite der Folie 5 dadurch stets warm und trocken an. Das nach Beispiel 3 erhaltene Muster ist außerdem weicher und drapierfähiger als die beiden Vergleichsmuster nach den Beispielen 1 und 2.

Nach der Reckung und Relaxation konnte keine Pinholes festgestellt werden.

Die Wasserdampfdurchlässigkeit nach DIN 53122, Klima B wurde mit 1210 g/m² 24h bestimmt.

## Patentansprüche

1. Verbundstoff, umfassend ein Laminat (1) aus einer mit einem Vliesstoff (7) verklebten Folie (5) aus polymerem Werkstoff, dadurch gekennzeichnet, daß der Vliesstoff (7) und die Folie (5) nur an örtlich getrennten Stellen (3) miteinander verklebt sind und daß das Laminat (1) nach seiner Bildung zumindest in einer Richtung gereckt ist.

2. Verbundstoff nach Anspruch 1, dadurch gekennzeichnet, daß das Laminat (1) in Längs- und Querrichtung gereckt ist.

3. Verbundstoff nach Anspruch 1 oder 2, dadurch gekennzeichnet, daß das Laminat (1) eine Reckung in Längsrichtung aufweist, die diejenige in Querrichtung um zumindest 30 % übertrifft

4. Verbundstoff nach einem der Ansprüche 1 bis 3, dadurch gekennzeichnet, daß das Laminat (1) in einem Maße gereckt ist, daß die Wasserdampfdurchlässigkeit zumindest 800 g/m² 24h beträgt, gemessen nach DIN 53122, Klima B.

5. Verbundstoff nach einem der Ansprüche 1 bis 4, dadurch gekennzeichnet, daß das Laminat (1) ohne die Verwendung eines sekundären Klebstoffes durch vorübergehendes Erschmelzen zumindest einer der enthaltenen Schichten (5,7) in örtlich getrennten Verschweißungszonen (3) gebildet ist.

6. Verbundstoff nach Anspruch 5, dadurch gekennzeichnet, daß die Verschweißungszonen (3) im Zuge von parallelen Linien angeordnet sind, die im wesentlichen quer zur Verstreckungsrichtung verlaufen.

7. Verbundstoff nach Anspruch 6, dadurch gekennzeichnet, daß die Verschweißungszonen (3) geradlinig ausgebildet sind.

8. Verbundstoff nach Anspruch einem der Ansprüche 1 bis 7, dadurch gekennzeichnet, daß die Schichten (5,7) in die Verschweißungszonen (3) mit ihrer ganzen Dicke eingebunden sind.

9. Verbundstoff nach einem der Ansprüche 1 bis 8, dadurch gekennzeichnet, daß der in dem Laminat (1) enthaltene Vliesstoff (7) zumindest teilweise aus endlosen Fasern besteht.

10. Verbundstoff nach einem der Ansprüche 1 bis 9, dadurch gekennzeichnet, daß der in dem Laminat (1) enthaltene Vliesstoff (7) zumindest teilweise aus Stapelfasern besteht.

11. Verbundstoff nach einem der Ansprüche 9 oder 10, dadurch gekennzeichnet, daß die in dem Vliesstoff (7) enthaltenen Fasern im wesentlichen unverstreckt sind.

12. Verbundstoff nach einem der Ansprüche 9 oder 10, dadurch gekennzeichnet, daß die in dem Vliesstoff (7) enthaltenen Fasern eine durch Nachtempern erhöhte Kristallinität haben.

13. Verbundstoff nach einem der Ansprüche 1 bis 12, dadurch gekennzeichnet, daß der in dem Laminat (1) enthaltene Vliesstoff (7) zumindest teilweise aus schmelzgeblasenen Fasern besteht.

14. Verbundstoff nach einem der Ansprüche 1 bis 13, dadurch gekennzeichnet, daß die in dem Laminat (1) enthaltene Folie (5) aus Polypropylen oder Polyethylen besteht.

15. Verbundstoff nach einem der Ansprüche 1 bis 14, dadurch gekennzeichnet, daß die Folie (5) einen Gehalt an gleichmäßig verteilten Mikropartikeln zur Begünstigung der Bildung von Mikroporen enthält.

16. Verbundstoff nach einem der Ansprüche 1 bis 15, dadurch gekennzeichnet, daß sich die Folie (5) und der Vliesstoff (7) im wesentlichen parallel zu einander erstrecken.

17. Verbundstoff nach Anspruch einem der Ansprüche 1 bis 15, dadurch gekennzeichnet, daß die Folie (5) und/oder der Vliesstoff (7) gekräuselt sind.

18. Hygieneartikel, umfassend ein Laminat (1) nach zumindest einem der Ansprüche 1 bis 17 als rückseitige Abdeckung.

19. Verpackungsmaterial, umfassend ein Laminat (1) nach zumindest einem der Ansprüche 1 bis 17 als rückseitige Abdeckung.

20. Baumembrane, umfassend ein Laminat (1) nach zumindest einem der Ansprüche 1 bis 17 als rückseitige Abdeckung.
